# EUROPÄISCHE PATENTSCHRIFT

(11) **EP 1 038 435 B1**
(45) Veröffentlichungstag und Bekanntmachung des Hinweises auf die Patenterteilung: **02.04.2003**
(21) Anmeldenummer: 00101543.7
(22) Anmeldetag: 27.01.2000
(51) Int. Cl.: A01K 63/04

(54) **Filtervorrichtung eines Gewässers**
Water filtering device
Dispositif à filtrer un plan d'eau

(30) Priorität: 29.01.1999 DE 29901537 U
(43) Veröffentlichungstag der Anmeldung: 27.09.2000
(73) Patentinhaber: Held GmbH, 75050 Gemmingen (DE); Minnova Mineralien-Handelsgesellschaft m.b.H., 8501 Lieboch (AT)
(72) Erfinder: Klement, Arnold, Mag., 8501 Lieboch (AT)
(74) Vertreter: Müller, Hans, Dipl.-Ing.

(56) Entgegenhaltungen:
- US-A- 3 247 826

## Beschreibung

### TECHNISCHES GEBIET

Die Erfindung betrifft eine Vorrichtung zum Filtern eines Gewässers, wie zum Beispiel eines Schwimm-, Pflanzen- oder Fischteiches. Mit der Filteranordnung soll die Wasserqualität des betreffenden Gewässers optimiert werden. So sollen das Entstehen von makroskopischen Algen weitestgehend verhindert und eine Schlickbildung auf dem Gewässerboden möglichst beschränkt werden. Das Wasser soll einem guten Pflanzenwuchs förderlich sein und Fischen ein störungsfreies Leben ermöglichen.

### STAND DER TECHNIK

Eine bekannte Filtervorrichtung der eingangs genannten Art besitzt eine Pumpe, die leitungsmäßig mit einem an der Oberfläche des Gewässers befindlichen Skimmer verbunden ist. Von diesem Skimmer wird das verschmutzte Oberflächenwasser angesaugt und über eine von der Pumpe wegführende Druckleitung zu einem Verteilschacht gepumpt. Aus dem Verteilerschacht strömt das von der Pumpe kommende Wasser in das Gewässer hinein. Bekannt ist es in diesem Zusammenhang, den Verteilerschacht im Bodengrund des Gewässers anzuordnen. Auf dem Verteilerschacht können verschiedene Kies- und Sandschichten angeordnet werden. Beim Herausströmen des Wassers aus dem Verteilerschacht strömt dieses Wasser von unten nach oben durch die Gesteinsschichten hindurch. Dabei findet eine Reinigungswirkung dieses Wassers statt. Das vom Skimmer angesaugte, verschmutzte Oberflächenwasser kann auf diese Weise gefiltert in das Gewässer zurückgeleitet werden.

Über eine weitere Leitung zwischen der Saugpumpe und dem Verteilerschacht kann ein Rückspülbetrieb und damit ein Reinigungsvorgang des Verteilerschachtes durchgeführt werden. Dieses im Rückspülbetrieb vom Verteilerschacht angesaugte Wasser wird über eine separate Leitung von der Saugpumpe durch einen Abflusskanal aus dem Gewässer herausgeleitet. Die dadurch entstehende Fehlmenge an Wasser wird durch einen separaten Zufluss von frischem Wasser ausgeglichen.

Eine derartige Reinigungsvorrichtung hat sich in der Praxis bewährt. Da die Einleitung von gereinigtem Wasser mittels eines Verteilerschachtes gleichsam punktuell in das Gewässer erfolgt, ist es insbesondere bei großflächigen Gewässern erforderlich, eine entsprechend große Anzahl von Verteilerschächten in dem Gewässer vorzusehen. Alle diese Verteilerschächte sind mit separaten Leitungen an die Pumpe angeschlossen. Aufgrund der Verschlammungsgefahr der Verteilerschächte müssen dieselben oftmals gereinigt werden. Infolge der relativ umständlichen und schwierigen Zugänglichkeit der Verteilerschächte, die oftmals an den tiefsten Stellen, zumindest aber entfernt vom Ufer plaziert sind, stellt das Rückspülen und damit das Reinigen der Verteilerschächte einen unerwünscht großen Aufwand dar.

Es ist auch bekannt, ein Drainagerohr schleifenförmig im Wasser zu verlegen. Das Drainagerohr ist mit seinem einen Ende an eine Saugpumpe angeschlossen.In den regelmäßig sehr langen Rohren ist der Druckabfall zum Rohrende hin unerwünscht groß. Dadurch ist längs des Rohres kein mengenmäßig gleicher Wassereintritt in das Rohr möglich.

Es ist ferner ein sternartig ausgebildetes Schlauchende bekannt, in dessen sich fingerartig wegspreizenden Armstummeln Wassereintrittslöcher vorhanden sind. Dieser sogenannte Rohrstern ist in seiner Geometrie vorgegeben. Infolge seiner sehr kurzen Armstummel findet bei dem als Sammler und nicht als Verteiler bekannten Rohrstern ein lediglich punktuelles Einsammeln von Wasser statt.

### DARSTELLUNG DER ERFINDUNG

Ausgehend von diesem Stand der Technik liegt der Erfindung die Aufgabe zugrunde, eine verbesserte Filtervorrichtung eines Gewässers anzugeben, um damit die Möglichkeit zu schaffen, eine möglichst hohe Wasserqualität auf möglichst wirtschaftliche Weise sicherzustellen.

Diese Erfindung ist durch Merkmale des Anspruchs 1 gegeben. Weiterbildungen der Erfindung sind Gegenstand von Unteransprüchen.

Ausgehend von einer Filtervorrichtung eines Gewässers mit einer Pumpe, mit einer mit der Pumpe im Filterbetrieb verbundenen Druckleitung, an welcher eine Filteranordnung angeschlossen ist, und mit einer Verzweigungsanordnung in der zu der Filteranordnung führenden Druckleitung zeichnet sich diese Filtervorrichtung erfindungsgemäß dadurch aus, dass die Verzweigungsanordnung zumindest zwei in Strömungsrichtung nachgeordnete Verzweigungsanordnungen aufweist, die Filteranordnung zumindest zwei mit Durchbrüchen versehene Verteilerrohre besitzt, die Leitungsäste in Strömungsrichtung ab einer Verzweigungsanordnung untereinander in etwa gleich lang sind und die Summe der öffnungsquerschnitte der Durchbrüche in den Verteilerrohren jedes Leitungsastes in etwa gleich groß ist, so dass im Bereich aller Verteilerrohre der Vorrichtung in etwa anteilig gleiche Mengen des von der Pumpe durch die Druckleitung zugeführten Wassers austreten können.

Mit dieser Filtervorrichtung können ohne aufwendige Steuerungsmaßnahmen großflächige Bodenzonen eines Gewässers als Filter ausgebildet werden.

Nach einer in der Zeichnung dargestellten Ausführungsform der Erfindung kann die Filteranordnung zumindest zwei mit Durchbrüchen versehene Verteilerrohre aufweisen, die in ihrem Mantel Durchbrüche aufweisen. Sofern der Rohranschluß ist im mittleren Mantelflächenbereich vorgesehen wird, ist der Druckabfall längs des Rohres wünschenswert gering. Die Verzweigungsanordnung in der Druckleitung erlaubt es, die Druckleitung in viele einzelne Druckleitungen (Leitungsäste) aufzuteilen. An jedem der Leitungsäste können Verteilerrohre angeschlossen werden. Mit Hilfe einer derartigen Verzweigungstechnik kann mit einer einzigen, eine Stammleitung darstellenden Druckleitung über entsprechend viele Leitungsäste mit dementsprechend vielen Verteilerrohren eine wünschenswert großflächige Verteilung des von der Pumpe in das Gewässer zurückströmenden Wassers vorgenommen werden.

Um ohne Regelungstechnik zu erreichen, dass aus allen Durchbrüchen der endseitig vorhandenen Verteilerrohre gleiche Mengen an Wasser austreten, was für die Filterwirksamkeit der durch die auf den Verteilerrohren liegenden Kies- und Granulatschichten sehr wichtig ist, sind die erfindungsgemäß vorstehend erwähnten jeweils ab Verzweigungsanordnung gleichlangen Leitungsäste und die in der Summe gleichgroßen Öffnungsquerschnitte, die in zueinander benachbarten Leitungsästen der Verteilerrohre endseitig vorhanden sind, vorgesehen.

Die an den einzelnen Enden der Leitungsäste angeschlossenen Verteilerrohre können mit ihrer Längsachse beliebig parallel zum Boden oder zur Wand des Gewässers ausgerichtet werden.

Über entsprechend unterschiedlich lange Leitungen lassen sich so im Grundriss beliebig geformte Bodenfilterzonen ausbilden.Die Durchbrüche können in einfacher Weise in Form von Schlitzen oder Löchern hergestellt werden.

Durch Absperreinrichtungen für die einzelnen Leitungen beziehungsweise für die einzelnen Rohre kann die Möglichkeit vorgesehen werden, einzelne Rohre gezielt rückzuspülen und damit zu reinigen. Die Absperrmöglichkeit ist umso wichtiger, je ungleicher sich die Rohre mit Schmutz zusetzen können. Ohne die Absperrmöglichkeit könnte nämlich ansonsten ein stark verschmutztes Rohr nicht durch Rückspülen gereinigt werden, solange andere, weniger verschmutzte Rohre betriebsmäßig gleichzeitig vorhanden sind.

Weitere Merkmale und Vorteile der Erfindung, insbesondere auch zu den die Filterrohre abdeckenden Kies- und Granulatschichten sind den in den Unteransprüchen ferner angegebenen Merkmalen sowie dem nachstehenden Ausführungsbeispiel zu entnehmen. Es zeigen:
- Fig. 1: eine Ansicht einer in einem Teich verlegten ersten Filteranordnung mit einer Verzweigungsanordnung und mehreren Verteilerrohren nach der Erfindung,
- Fig. 2: einen schematisierten Querschnitt durch den Schichtaufbau in dem Teich im Bereich dieser Filteranordnung,
- Fig. 3: eine schematisierte Ansicht einer drei Verteilerrohre aufweisenden Verzweigungsanordnung nach der Erfindung,
- Fig. 4: ein an einem Leitungsast angeschlossenes Verteilerrohr nach der Erfindung und
- Fig. 5: eine schematische Darstellung einer zweiten Ausführungsart einer Filteranordnung nach der Erfindung.

### WEGE ZUM AUSFÜHREN DER ERFINDUNG

Eine Vorrichtung 10 zum Filtern des Wassers eines Teiches 12 besitzt einen Skimmer 14. Über den Skimmer 14 kann verschmutztes Oberflächenwasser des Teiches 12 angesaugt werden. Der Skimmer ist über eine Saugleitung 16 mit einer Saugpumpe 18 verbunden. Über ein Absperrventil 20 kann die Saugleitung 16 verschlossen werden.

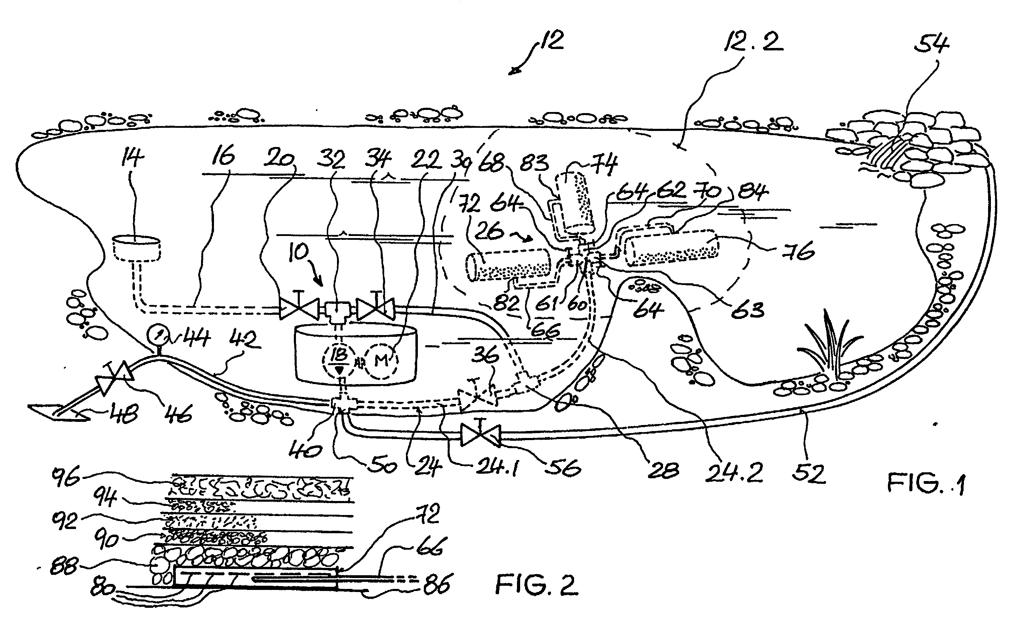

Von der Pumpe 18, die über einen geeigneten Motor 22 angesteuert wird, führt eine Druckleitung 24 zu einem in Fig. 1 schematisch dargestellten Filter 26. Aus dem Filter 26 kann das von dem Skimmer 14 angesaugte Oberflächenwasser wieder zurück in den Teich 12 eingespeist werden.

An der Stelle 28 der Druckleitung 24 zweigt eine Verbindungsleitung 30 ab, die an der Stelle 32 in die Saugleitung 16 zurückführt. Die Verbindungsleitung 30 lässt sich über ein Absperrventil 34 verschließen. Über ein weiteres Absperrventil 36 lässt sich der pumpenseitige Leitungsbereich 24.1 vom filterseitigen Leitungsbereich 24.2 abtrennen. Schließlich ist noch ein Durchflussmesser im pumpenseitigen Leitungsbereich 24.1 der Druckleitung 24 eingebaut.

An einer nahe bei der Pumpe 18 befindlichen Stelle 40 der Druckleitung 24 zweigt eine Abflussleitung 42 ab. An dieser Abflussleitung 42 ist ein Manometer 44 angeschlossen. Über ein Absperrventil 46 lässt sich diese Abflussleitung 42 verschließen. Die Abflussleitung 42 führt zu einem in der Zeichnung nicht näher dargestellten Abflusskanal 48.

An dem pumpenseitigen Leitungsbereich 24.1 der Druckleitung 24 ist an der Stelle 50 eine weitere Leitung 52 angeschlossen. Diese Leitung 52 führt zu einer weiteren Einleitungsstelle, die im vorliegenden Fall als Quelle 54 bezeichnet wird. Diese Quelle 54 kann zum Beispiel in Gestalt eines sogenannten Quellensteins oder als Fontäne oder dergleichen ausgebildet sein. Durch die Leitung 52 kann daher vom Skimmer 14 angesaugtes Wasser über die Quelle 54 in den Teich 12 zurückgeführt werden.

Bei Betrieb der Vorrichtung 10 im sogenannten Filterbetrieb sind die Absperrventile 20 beziehungsweise 36 in der Saugleitung 16 beziehungsweise Druckleitung 24 offen. Die anderen in Fig. 1 dargestellten Absperrventile, nämlich das in der Abflussleitung 42 befindliche Absperrventil 46, das in der Verbindungsleitung 30 befindliche Absperrventil 34 und das in der Leitung 52 befindliche Absperrventil 56, sind geschlossen. Dadurch strömt das vom Skimmer 14 angesaugte Wasser durch die Leitung 16, den pumpenseitigen Leitungsbereich 24.1 und den filterseitigen Leitungsbereich 24.2 zum Filter 26, wo es in den Teich 12 wieder eintritt. Sofern das Absperrventil 56 geöffnet wird, kann gleichzeitig Wasser auch durch die Leitung 52 über die Quelle 54 in den Teich 12 zurückgeführt werden.

Im Reinigungsbetrieb, in dem die Filter 26 gereinigt werden sollen, wird von der Saugpumpe 18 Wasser über den filterseitigen Leitungsbereich 24.2 vom Filter 26 angesaugt. Die filterseitige Leitungsverbindung 24.2 ist leitungsmäßig verbunden mit der jetzt offenen Verbindungsleitung 30.Das in dem pumpenseitigen Leitungsbereich 24.1 vorhandene Absperrventil 36 ist geschlossen.Dadurch strömt das vom Filter 26 angesaugte Wasser über die Verbindungsleitung 30 in die Saugleitung 16 und von dort zur Pumpe 18. Das in der Saugleitung 16 befindliche Absperrventil 20 ist geschlossen. Durch Öffnen des in der Abflussleitung 42 befindlichen Absperrventils 46 und Schließen der in der Leitung 52 und in dem pumpenseitigen Leitungsbereich 24.1 befindlichen Absperrventile 56 und 36 wird das vom Filter 26 angesaugte Wasser über die Abflussleitung 42 in den Abflusskanal 48 geleitet und damit aus dem Teich 12 herausgeleitet. Das in der Abflussleitung 42 befindliche Manometer 44 zeigt durch unterschiedlich hohe Leitungsdrücke an, wie stark der Filter 26 verschmutzt ist. Je verschmutzter der Filter 26 ist, umso höher ist der vom Manometer 44 angezeigte Druck.

Der im pumpenseitigen Leitungsbereich 24.1 eingebaute Durchflussmesser 38 zeigt an, wieviel Wasser zu den Filtern 26 geleitet wird. Von der Größe der Durchflussmenge abhängig kann dann entschieden werden, von Filterbetrieb auf Reinigungsbetrieb umzustellen.

Die Filtervorrichtung 26 befindet sich am Ende des filterseitigen Leitungsbereiches 24.2. Dieser Leitungsbereich mündet in ein im vorliegenden Beispielsfall kreuzförmiges Verbindungsstück 60, welches eine Verzweigungsanordnung für die Druckleitung 24 darstellt. Dieses Verbindungsstück 60 besitzt drei Zweigstutzen 61, 62, 63. In jedem Zweigstutzen ist ein Absperrhahn 64 vorhanden.

An den Zweigstutzen 61, 62, 63 sind über Leitungsäste 66, 68, 70 im vorliegenden Fall drei endseitig durch Kappen verschlossene Rohre 72, 74, 76 angeschlossen.

Die Anschlussstellen 82, 83, 84 befinden sich im Mantelbereich, in halber Rohrlänge vom Rohrende aus gesehen.In diesen Rohren sind über deren Mantel verteilt mehrere Schlitze 80 vorhanden. Das von der Pumpe 18 vom Skimmer 14 angesaugte Wasser wird über die Druckleitung 24 im Bereich des kreuzförmigen Verbindungsstückes 60 in die drei gleichlangen Leitungsäste 66, 68, 70 und weiter in die drei Rohre 72, 74, 76 geleitet. Von dort tritt das Wasser gleichmäßig durch alle Schlitze 80 heraus. Dieser Leitungsfluss ist dann möglich, wenn die drei Absperrhähne 64 in den drei Zweigstutzen 61, 62, 63 in AUF-Stellung stehen. Sofern eine oder mehrere dieser Absperrhähne 64 verschlossen wird, kann eines oder mehrere der Rohre 72, 74, 76 von der Druckleitung 24 abgekoppelt werden.

Diese Möglichkeit zum Absperren der Zweigstutzen 61, 62, 63 und damit der Rohre 72, 74, 76 kann im Rückspülbetrieb wichtig sein. Im Rückspülbetrieb wird durch den filterseitigen Leitungsbereich 24.2 das Wasser aus den drei Rohren 72, 74, 76 angesaugt. Bei ungleichem Verschmutzungsgrad der drei Rohre 72, 74, 76 würde das Wasser nur aus dem am wenigsten verunreinigten Rohr angesaugt werden, da sich das Wasser den Weg des geringsten Widerstandes wählt. Bei einem stark verschmutzten Rohr werden die entsprechend anderen, nicht an dessen Zweigleitung vorhandenen Absperrhähne 64 zugesperrt, so dass nur dieses stark verschmutzte Rohr leitungsmäßig mit dem filterseitigen Leitungsbereich 24.2 verbunden ist.Durch nacheinander Absperren der drei Rohre lassen sich so alle Rohre nacheinander durch Rückspülen reinigen.

Vorteilhafterweise wird, wie in Fig. 1 angedeutet, das kreuzförmige Verbindungsstück 60 oder eine sonstige Verzweigungsanordnung in der Nähe des Ufers angeordnet. Dadurch wird ein leichter Zugang zu den Absperrhähnen 64 ermöglicht, was für den Reinigungsbetrieb (Rückspülbetrieb) von großem Vorteil ist. Bei Schwimmteichen könnte zum Beispiel eine Verzweigungsanordnung auch an Badestegen oder sonstigen, ins Wasser hineinragenden, begehbaren Einrichtungen angebracht werden.

Im vorliegenden Fall ist der Bereich der drei Rohre 72, 74, 76 auf einer Teichfolie 86 plaziert (Fig. 2). Oberhalb des Rohres ist eine Filterzone ausgebildet. Diese besteht aus einer Kiesschicht 88 mit Steingrößen im Durchmesser von 16 und 32 mm (Millimeter) Durchmesser. Darüber ist eine Kiesschicht 90 mit Steinen im Durchmesser von 4 und 8 mm angeordnet. Wieder darüber ist eine Filtergranulat-Schicht 92 vorhanden. Das Filtergranulat ist ein Ionen austauschfähiges Granulat mit hoher Mikro- und Makroporösität. Dieses Granulat sorgt für einen raschen und kontrollierten Aufbau einer langfristig aktiven und stabilen Teichbiologie. Es entzieht dem Wasser permanent organische und gelöste Verunreinigungen. Mit seiner definierten Phosphor-Aufnahmekapazität verhindert es eine Schwebealgenbildung und Wassertrübung. Es reguliert auf natürliche Weise den pH-Wert. Als Schutzschicht ist darüber eine Rundkies-Schicht 94 angeordnet. Als oberste Schichtung ist ein Deckgranulat 96 vorgesehen. Dieses kann des besseren Aussehens wegen optisch eingefärbt sein. Es vermindert das Entstehen von makroskopischen Algen insbesondere im Flachwasserbereich und in einer Seerosenzone. Im vorliegenden Fall besteht es aus Gestein mit einem Durchmesser von 16 und 32 mm.

Statt der Rohre 72, 74, 76 können auch andere Wasseraustrittsvorrichtungen vorgesehen werden. Diese Austrittsvorrichtungen können beispielsweise großflächige Filtervorrichtungen sein, wie sie beispielsweise in Form von sackartigen Kokosmatten bekannt sind.

Statt des einen Verbindungsstückes 60 können selbstverständlich auch mehrere derartige oder vergleichbare Verbindungsstücke 60 vorgesehen werden. Mit einer derartigen Verzweigungstechnik lässt sich ein sehr großer Bereich 12.2 eines Teiches 12 als Bodenfilterzonenbereich ausbilden.

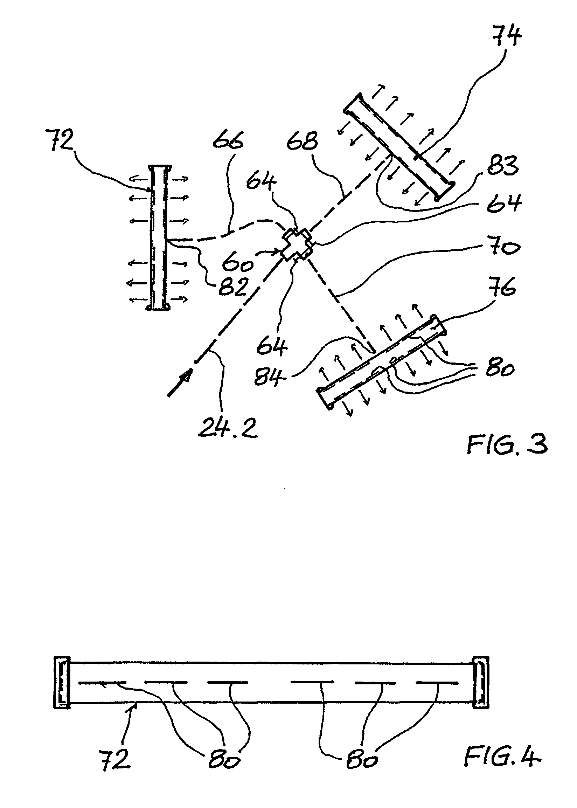

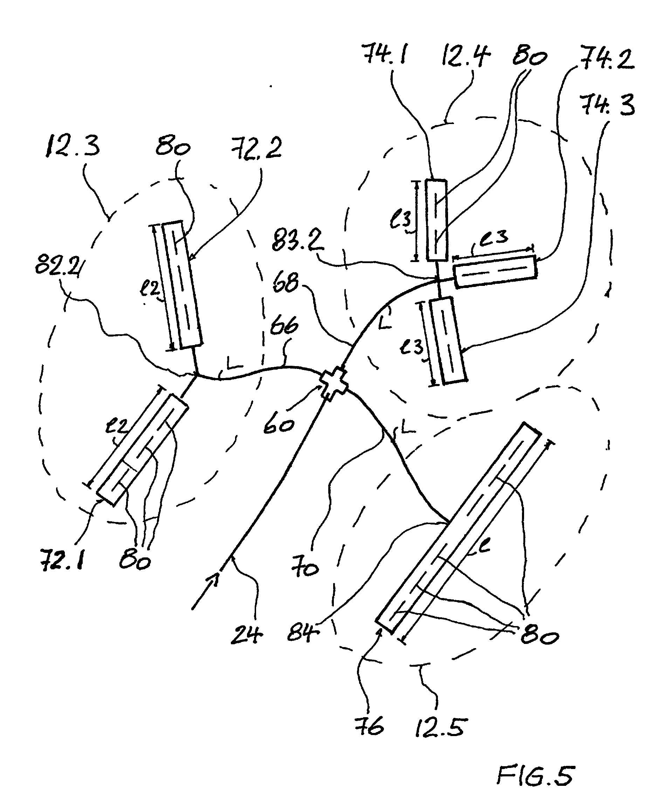

In Fig. 5 ist eine andere mehrstufige Verzweigungsanordnung dargestellt. So sind wie bei der Darstellung gemäß Fig. 3 drei Filterzonenbereiche 12.3, 12.4 und 12.5 vorhanden. In diesen drei Filterzonenbereichen tritt das durch die Druckleitung 24 von der in Fig. 5 nicht dargestellten Pumpe 18 zugeführte und über das Verbindungsstück 60 in diese drei Filterzonenbereiche 12.3, 12.4 und 12.5 über die Leitungsäste 66, 68, 70 zugeführte Wasser in gleichen Mengen aus.

Um diesen gleichen mengenmäßigen Wasseraustritt in den drei Filterzonenbereichen 12.3, 12.4 und 12.5 zu erreichen, besitzen die drei Leitungsäste 66, 68, 70 die gleiche Länge L. Außerdem sind die an den Enden der Leitungsäste 66, 68, 70 angeordneten jeweiligen Verteilerrohre 72.1, 72.2 sowie 74.1, 74.2, 74.3 beziehungsweise 76 gleich ausgelegt. So ist die Anzahl der in den jeweiligen Rohren vorhandenen Schlitze 80 in jedem der drei Filterzonenbereiche 12.3, 12.4 und 12.5 mengenmäßig und größenmäßig gleich. Im vorliegenden Beispielsfall wird dies dadurch verdeutlicht, dass in den beiden Verteilerrohren 72.1 und 72.2 jeweils drei Schlitze zeichnerisch dargestellt sind. Die beiden Rohre 72.1 und 72.2 haben die Länge 11. Die Länge 11 ist halb so groß wie die Länge 1 des Rohres 76. Aus dem Rohr 76 mit den sechs dargestellten Schlitzen tritt damit ebensoviel Wasser aus wie aus den beiden Rohren 72.1 und 72.2. Die beiden Rohre 72.1 und 72.2 sind damit funktionell dem Rohr 76 vergleichbar; die bei dem Rohr 76 vorhandene Anschlussstelle 84 des Leitungsastes 70 entspricht damit der Verzweigungsstelle 82.2 vor den beiden Verteilerrohren 72.1 und 72.2.

Bei dem Filterzonenbereich 12.4 sind drei Verteilerrohre 74.1, 74.2 und 74.3 vorhanden. Die drei Rohre zusammen haben einen Öffnungsquerschnitt, der dem Verteilerrohr 76 entspricht. Dies ist dadurch verdeutlicht, dass in jedem der drei Rohre 74.1, 74.2 und 74.3 zwei Schlitze 80 in Fig. 5 dargestellt sind. Zusammen ergeben sich sechs Schlitze, ebenso wie bei dem Verteilerrohr 76. Die Länge dieser drei Rohre 74, 74.2 und 74.3 ist jeweils ein Drittel der Länge 1 des Rohres 76.

Die bei Fig. 3 vergleichsweise vorhandene Anschlussstelle 83 wird in Fig. 5 durch eine strömungsmäßig vor den drei Rohren vorhandene Verzweigungsstelle 83.3 ersetzt.

## Patentansprüche

1. Vorrichtung (10) zum Filtern eines Gewässers (12),
- mit einer Pumpe (18),
- mit einer mit der Pumpe (18) im Filterbetrieb verbundenen Druckleitung (24),
- mit einer an der Druckleitung (24) anschließbaren Filteranordnung (26),
- mit einer Verzweigungsanordnung (60) in der zu der Filteranordnung (26) führenden Druckleitung (24),
**dadurch gekennzeichnet, dass**
- die Verzweigungsanordnung zumindest zwei in Strömungsrichtung nachgeordnete Verzweigungsanordnungen (60, 82.2, 83.2, 84) aufweist,
- die Filteranordnung zumindest zwei mit Durchbrüchen (80) versehene Verteilerrohre (72, 74, 76) besitzt,
- die Leitungsäste (66, 68, 70) in Strömungsrichtung ab einer Verzweigungsanordnung (60, 82.2, 83.2, 84) untereinander in etwa gleich lang sind und
- die Summe der Öffnungsquerschnitte der Durchbrüche (80) in den Verteilerrohren jedes Leitungsastes in etwa gleich groß ist, so dass im Bereich aller Verteilerrohre der Vorrichtung (10) in etwa anteilig gleiche Mengen des von der Pumpe (18) durch die Druckleitung (24) zugeführten Wassers austreten können.

2. Vorrichtung nach Anspruch 1
**dadurch gekennzeichnet, dass**
- die Filteranordnung zumindest zwei mit Durchbrüchen (80) versehene Verteilerrohre (72, 74, 76) besitzt und
- der Anschluß der jeweiligen Druckleitung (24) im Mantelbereich des betreffenden Rohres, etwa in halber Rohrlänge vorhanden ist.

3. Vorrichtung nach Anspruch 1 oder 2,
**dadurch gekennzeichnet, dass**
- die Filteranordnung zumindest zwei mit Durchbrüchen versehene Verteilerrohre besitzt,
- der Anschluss der jeweiligen Druckleitung im Stirnbereich des betreffenden Rohres vorhanden ist.

4. Vorrichtung nach einem der vorstehenden Ansprüche,
**dadurch gekennzeichnet, dass**
- die Durchbrüche (80) im Mantel des Rohres (72, 74, 76) angeordnet sind.

5. Vorrichtung nach Anspruch 4,
**dadurch gekennzeichnet, dass**
- die Durchbrüche im Mantel des Rohres als Schlitze (80) und/oder Löcher ausgebildet sind.

6. Vorrichtung nach einem der vorstehenden Ansprüche,
**dadurch gekennzeichnet, dass**
- die Längsachse der Verteilerrohre (72, 74, 76) etwa parallel zum Boden des Gewässers ausgerichtet ist.

7. Vorrichtung nach einem der vorstehenden Ansprüche,
**dadurch gekennzeichnet, dass**
- Leitungsäste (66, 68, 70) absperrbar (64) sind.

8. Vorrichtung nach einem der vorstehenden Ansprüche,
**dadurch gekennzeichnet, dass**
- Einrichtungen zum Absperren der Leitungsäste (66, 68, 70) an der Verzweigungsanordnung (60) vorhanden sind.

9. Vorrichtung nach einem der vorstehenden Ansprüche,
**dadurch gekennzeichnet, dass**
- die Verzweigungsanordnung als ein kreuzförmiges oder sternförmiges Verbindungsstück (60) ausgebildet ist.

10. Vorrichtung nach einem der vorstehenden Ansprüche,
**dadurch gekennzeichnet, dass**
- die Filteranordnung (26) einen Bereich (12.2) des Gewässers (12) mit einer Filterzone umfasst, in der ein ionenaustauschfähiges Granulat (92) mit hoher Mikro- und Makroporösität vorhanden ist.

11. Vorrichtung nach Anspruch 10,
**dadurch gekennzeichnet, dass**
- das Granulat (92) ein natürliches Gesteinsgranulat ist.

12. Vorrichtung nach Anspruch 10 oder 11,
**dadurch gekennzeichnet, dass**
- Granulat- und Kiesschichten (88, 90, 92, 94, 96) übereinandergeschichtet vorhanden sind,
- diese Schichten von dem durch die Zuleitung zugeführten Gewässer-Wasser von unten nach oben durchströmbar sind.

## Claims

1. Device (10) for filtering a body of water (12),
- with a pump (18),
- with a delivery line (24) connected to the pump (18) during filtering operation,
- with a filter arrangement (26) connectable to the delivery line (24),
- with a branching arrangement (60) in the delivery line (24) leading to the filter arrangement (26),
**characterized in that**
- the branching arrangement has at least two branching arrangements (60, 82.2, 83.2, 84) located downstream in the direction of flow,
- the filter arrangement possesses at least two distributor pipes (72, 74, 76) provided with perforations (80),
- the line branches (66, 68, 70) are of approximately equal length to one another in the direction of flow from a branching arrangement (60, 82.2, 83.2, 84), and
- the sum of the orifice cross sections of the perforations (80) in the distributor pipes of each line branch is approximately equal, so that approximately proportionally equal quantities of the water supplied by the pump (18) through the delivery line (24) can emerge in the region of all the distributor pipes of the device (10).

2. Device according to Claim 1, **characterized in that**
- the filter arrangement possesses at least two distributor pipes (72, 74, 76) provided with perforations (80), and
- the connection of the respective delivery line (24) is present in the casing region of the respective pipe, approximately at half the pipe length.

3. Device according to Claim 1 or 2, **characterized in that**
- the filter arrangement possesses at least two distributor pipes provided with perforations,
- the connection of the respective delivery line is present in the end region of the respective pipe.

4. Device according to one of the preceding claims, **characterized in that**
- the perforations (80) are arranged in the casing of the pipe (72, 74, 76).

5. Device according to Claim 4, **characterized in that**
- the perforations in the casing of the pipe are designed as slots (80) and/or holes.

6. Device according to one of the preceding claims, **characterized in that**
- the longitudinal axis of the distributor pipe (72, 74, 76) is oriented approximately parallel to the bottom of the body of water.

7. Device according to one of the preceding claims, **characterized in that**
- line branches (66, 68, 70) are capable of being shut off (64).

8. Device according to one of the preceding claims, **characterized in that**
- means for shutting off the line branches (66, 68, 70) are present at the branching arrangement (60).

9. Device according to one of the preceding claims, **characterized in that**
- the branching arrangement is designed as a cross-shaped or star-shaped connection piece (60).

10. Device according to one of the preceding claims, **characterized in that**
- the filter arrangement (26) comprises a region (12.2) of the body of water (12) with a filter zone in which an ion-exchangeable granulate (92) with high micro- and macroporosity is present.

11. Device according to Claim 10, **characterized in that**
- the granulate (92) is a natural rock granulate.

12. Device according to Claim 10 or 11, **characterized in that**
- granulate and gravel layers (88, 90, 92, 94, 96) are present, layered one above the other,
- the water of the body of water which is supplied through the supply line is capable of flowing through these layers from the bottom upwards.

## Revendications

1. Dispositif (10) pour filtrer un plan d'eau (12) comportant
- une pompe (18)
- une conduite de refoulement (24) raccordée à la pompe (18) lors de l'opération de filtrage,
- un dispositif filtrant (26) pouvant être raccordé à la conduite de refoulement (24),
- un dispositif de bifurcation (60) dans la conduite de refoulement (24) menant au dispositif filtrant (26),
**caractérisé en ce que**
- le dispositif de bifurcation présente au moins deux dispositifs de bifurcation en aval (60, 82.2, 83.2, 84)
- le dispositif filtrant présente au moins deux tuyaux de distribution (72, 74, 76) pourvus de percements (80),
- les branches de conduite (66, 68, 70) présentent approximativement la même longueur en aval d'un dispositif de bifurcation (60, 82.2, 83.2, 84) et
- la somme des sections transversales ouvertures des percements (80) dans les tuyaux de distribution de chaque branche de conduite est approximativement la même, de façon à ce que l'eau amenée dans la conduite de refoulement (24) par la pompe (18) puisse sortir de la zone de tous les tuyaux de distribution du dispositif (10) à quantités sensiblement égales.

2. Dispositif selon la revendication 1, **caractérisé en ce que**
- le dispositif filtrant comporte au moins deux tuyaux de distribution (72, 74, 76) pourvus de percements (80) et
- le raccordement des différentes conduites de refoulement (24) se trouve dans la zone de l'enveloppe du tuyau respectif, à peu près à mi-longueur du tuyau.

3. Dispositif selon la revendication 1 ou 2 **caractérisé en ce que**
- le dispositif filtrant présente au moins deux tuyaux de distribution pourvus de percements,
- le raccordement des différentes conduites de refoulement se trouve dans la zone frontale du tuyau respectif.

4. Dispositif selon l'une quelconque des revendications précédentes,
**caractérisé en ce que**
- les percements (80) sont disposés dans l'enveloppe du tuyau (72, 74, 76).

5. Dispositif selon la revendication 4, **caractérisé en ce que**
- les percements dans l'enveloppe du tuyau sont réalisés sous forme de fentes (80) et/ou de trous.

6. Dispositif selon l'une quelconque des revendications précédentes,
**caractérisé en ce que**
- l'axe longitudinal des tuyaux de distribution (72, 74, 76) est aligné à peu près parallèlement au fond du plan d'eau.

7. Dispositif selon l'une quelconque des revendications précédentes,
**caractérisé en ce que**
- des branches de conduite (66, 68, 70) peuvent être fermées (64).

8. Dispositif selon l'une quelconque des revendications précédentes,
**caractérisé en ce que**
- des installations pour fermer les branches de conduite (66, 68, 70) sont prévues sur le dispositif de bifurcation (60).

9. Dispositif selon l'une quelconque des revendications précédentes,
**caractérisé en ce que**
- le dispositif de bifurcation est réalisé sous la forme d'une pièce de jonction (60) cruciforme ou en forme d'étoile.

10. Dispositif selon l'une quelconque des revendications précédentes,
**caractérisé en ce que**
- le dispositif filtrant (26) couvre une zone (12.2) du plan d'eau (12) avec une zone filtrante, dans laquelle se trouve un granulat (92) pouvant échanger des ions hautement macro- et micro-poreux.

11. Dispositif selon la revendication 10, **caractérisé en ce que**
- le granulat (92) est un granulat de roche naturel.

12. Dispositif selon la revendication 10 ou 11, **caractérisé en ce que**
- des couches de granulat et de gravier (88, 90, 92, 94, 96) sont superposées,
- ces couches peuvent être traversées par l'eau du plan d'eau amenée par la conduite de bas en haut.
